# EUROPEAN PATENT APPLICATION

(11) **EP 4 640 539 A1**
(43) Date of publication of application: **29.10.2025**
(21) Application number: 25170840.0
(22) Date of filing: 15.04.2025
(51) Int. Cl.: B62J 1/04, B62J 1/12, B62J 9/14, B62K 19/46

(54) **SEAT STRUCTURE OF SADDLE-TYPE VEHICLE WITH OPENING ASSIST DAMPER**

(30) Priority: 23.04.2024 JP 2024069767
(71) Applicant: Suzuki Motor Corporation, Shizuoka 432-8611 (JP)
(72) Inventor: OKAJIMA, Hiroki, Hamamatsu-shi (JP); KATSURA, Hiroto, Hamamatsu-shi (JP)
(74) Representative: Haseltine Lake Kempner LLP

(57) **Abstract**

An opening and closing mechanism (50) couples a seat (16) to a vehicle body of a straddle-type vehicle such that the seat is openable and closable. The opening and closing mechanism is provided with a base bracket (61) attached to the vehicle body, seat brackets (51, 52) attached to the seat, and a repulsion member (71) that applies a repulsion force to the seat in an opening direction. The seat bracket is swingably coupled to the base bracket, a base end portion (73) of the repulsion member is swingably coupled to the vehicle body, and a distal end portion (72) of the repulsion member is swingably coupled to the seat. When the seat is closed, a swing center (C1) of the distal end portion of the repulsion member is located on a straight line (L1) connecting a swing center (C3) of the seat bracket and a swing center (C2) of the base end portion of the repulsion member or the straight line.

## Description

### TECHNICAL FIELD

The present invention relates to an opening and closing mechanism for a seat.

### BACKGROUND ART

As an opening and closing mechanism for a seat of a straddle-type vehicle, there is known a mechanism in which a lifting operation of a seat is assisted by a damper (for example, see Patent Literature 1). In the opening and closing mechanism for a seat described in Patent Literature 1, a movable bracket provided at a front end portion of a seat and a fixed bracket provided on a vehicle body frame are coupled via a hinge so as to be able to open and close. A damper is coupled to an intermediate portion of the seat in a front-rear direction, and a repulsion force of the damper acts on the seat in an opening direction when the seat is closed. Therefore, a driver can open the seat by simply applying a light upward force, and the seat is held in an open state by the repulsion force of the damper.

### CITATION LIST

### PATENT LITERATURE

Patent Literature 1: JP2001-122172A

### SUMMARY OF INVENTION

### TECHNICAL PROBLEM

In the opening and closing mechanism for a seat described in Patent Literature 1, a lock mechanism keeps the seat in a closed state, but the repulsion force of the damper also acts on the lock mechanism, making an unlocking operation difficult.

The present invention has been made in view of the above, and an object of the present invention is to provide an opening and closing mechanism that is easy to operate with a simple configuration.

### SOLUTION TO PROBLEM

An opening and closing mechanism according to an aspect of the present invention is an opening and closing mechanism for a seat that is coupled to a vehicle body of a straddle-type vehicle and configured to be openable and closable manner, the opening and closing mechanism including: a base bracket attached to the vehicle body; a seat bracket attached to the seat; and a repulsion member configured to apply a repulsion force to the seat in an opening direction, in which the seat bracket is swingably coupled to the base bracket, a base end portion of the repulsion member is swingably coupled to the vehicle body, a distal end portion of the repulsion member is swingably coupled to the seat, and when the seat is closed, a swing center of the distal end portion of the repulsion member is located on a straight line connecting a swing center of the seat bracket and a swing center of the base end portion of the repulsion member or below the straight line. Thus, the above problem is solved.

### ADVANTAGEOUS EFFECTS OF INVENTION

According to the opening and closing mechanism of the aspect of the present invention, when the seat is lifted and the seat bracket swings relative to the base bracket, the seat is pushed up in the opening direction by the repulsion member, and the lifting operation of the seat is assisted. When the seat is closed, the repulsion force of the repulsion member does not act in the opening direction of the seat. Therefore, the repulsion force of the repulsion member does not make an unlocking operation of a seat lock difficult. In addition, a gap is less likely to form at a joint portion between the seat and a cover or the like, and waterproofing properties are not deteriorated.

### BRIEF DESCRIPTION OF DRAWINGS

[Fig. 1] Fig. 1 is a left side view of a straddle-type vehicle of the present embodiment.
[Fig. 2] Fig. 2 is a left side view of a rear portion of a vehicle body of the present embodiment.
[Fig. 3] Fig. 3 is a top view of the rear portion of the vehicle body of the present embodiment.
[Fig. 4] Fig. 4 is a perspective view of an opening and closing mechanism of the present embodiment.
[Fig. 5] Fig. 5 is a cross-sectional view showing the opening and closing mechanism of the present embodiment when a seat is closed.
[Fig. 6] Fig. 6 is a cross-sectional view showing the opening and closing mechanism of the present embodiment when the seat is open.
[Fig. 7] Fig. 7 is a cross-sectional view showing an opening and closing mechanism of a modification when a seat is closed.

### DESCRIPTION OF EMBODIMENTS

An opening and closing mechanism according to an aspect of the present invention couples a seat to a vehicle body of a straddle-type vehicle such that the seat is openable and closable. In this opening and closing mechanism, a base bracket is attached to the vehicle body, a seat bracket is attached to the seat, and the seat bracket is swingably coupled to the base bracket. A repulsion force is applied to the seat in an opening direction from a repulsion member, a base end portion of the repulsion member is swingably coupled to the vehicle body, and a distal end portion of the repulsion member is swingably coupled to the seat. When the seat is closed, a swing center of the distal end portion of the repulsion member is located on or below a straight line connecting a swing center of the seat bracket and a swing center of the base end portion of the repulsion member. When the seat is lifted and the seat bracket swings relative to the base bracket, the seat is pushed up in the opening direction by the repulsion member, and the lifting operation of the seat is assisted. When the seat is closed, the repulsion force of the repulsion member does not act in the opening direction of the seat. Therefore, the repulsion force of the repulsion member does not make an unlocking operation of a seat lock difficult. In addition, a gap is less likely to form at a joint portion between the seat and a cover or the like, and waterproofing properties are not deteriorated.

### [Embodiment]

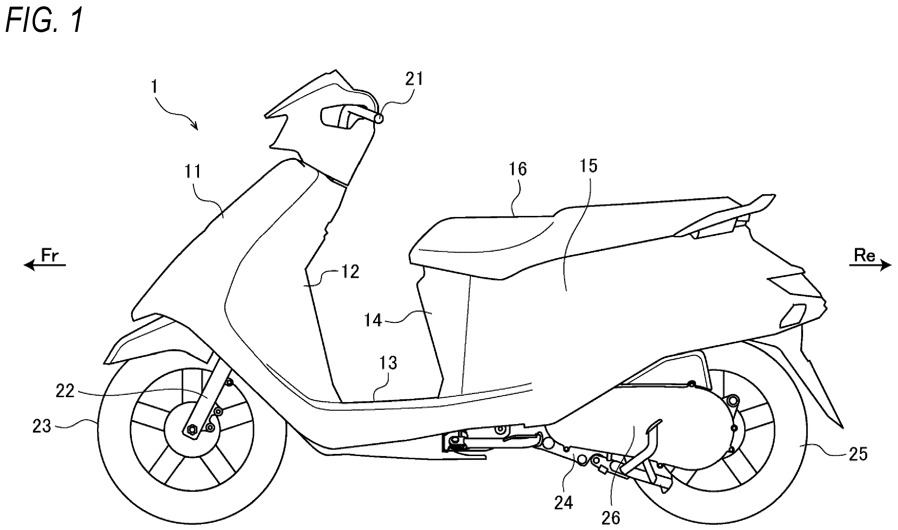

Hereinafter, a straddle-type vehicle according to the present embodiment will be described with reference to the accompanying drawings. Fig. 1 is a left side view of the straddle-type vehicle according to the present embodiment. In the following drawings, an arrow Fr indicates a vehicle front side, an arrow Re indicates a vehicle rear side, an arrow L indicates a vehicle left side, and an arrow R indicates a vehicle right side.

As shown in Fig. 1, a straddle-type vehicle 1 is equipped with various covers that are vehicle body exteriors on an underbone vehicle body frame. The straddle-type vehicle 1 is provided with a front cover 11 on a vehicle front side and a front leg shield 12, which protects feet of a rider, on a rear side of the front cover 11. A floor board 13 extends rearward from a lower end of the front leg shield 12, and a body cover 14 and a pair of side covers 15 are provided on a rear side of the floor board 13. A seat 16 having a continuous seating surface for a driver and a passenger is provided on upper portions of the side covers 15.

The front cover 11 is provided with a handle 21 on an upper side, and a front wheel 23 is rotatably supported via a pair of front forks 22 on a lower side of the front cover 11. A swing arm 24 with a motor is provided on lower sides of the side covers 15. The swing arm 24 is swingably coupled to the vehicle body frame, and a rear wheel 25 is rotatably supported on a rear portion of the swing arm 24. The swing arm 24 has a left side surface covered with a swing arm cover 26, and power is transmitted from the motor (not shown) to the rear wheel 25 via a belt-type continuously variable transmission (not shown) inside the swing arm cover 26.

In this type of straddle-type vehicle, a seat is coupled to a vehicle body so as to be openable and closable. A scooter-type straddle-type vehicle generally has a structure in which the seat is not closed under its own weight when the seat is opened more than upright, but there is also a type in which a seat opening degree is small and the seat is not closed under its own weight by a repulsion member such as a damper or a spring. In this type of straddle-type vehicle, a repulsion force of a damper or the like acts on the seat even when the seat is closed. Therefore, even when the seat is held in a closed state by a lock mechanism, the repulsion force of the damper or the like also acts on the lock mechanism, making an unlocking operation difficult.

Since the repulsion force acts on the seat in an opening direction, a gap is likely to be generated at a joint portion between the seat and a cover or the like, and waterproofing properties are deteriorated. In addition, when the damper or the like is installed on only one of left and right sides and only one side of the seat is supported by the damper or the like, the seat may be inclined. To prevent the gap at the joint portion and the inclination of the seat, it is necessary to increase the rigidity of the seat itself, which makes the seat heavier. In an opening and closing mechanism for a seat of the present embodiment, the seat is held by a repulsion force of a damper or the like when the seat is open, and the repulsion force of the damper or the like is not applied to the seat when the seat is closed.

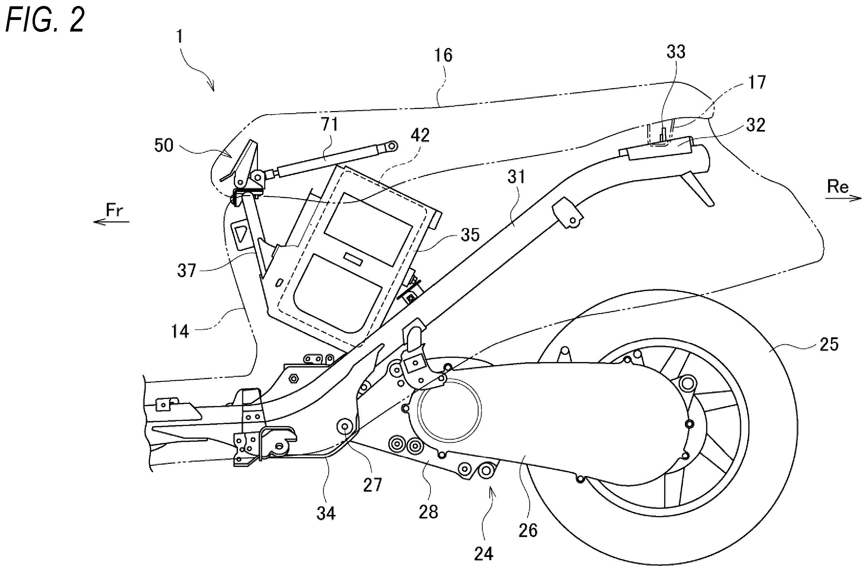

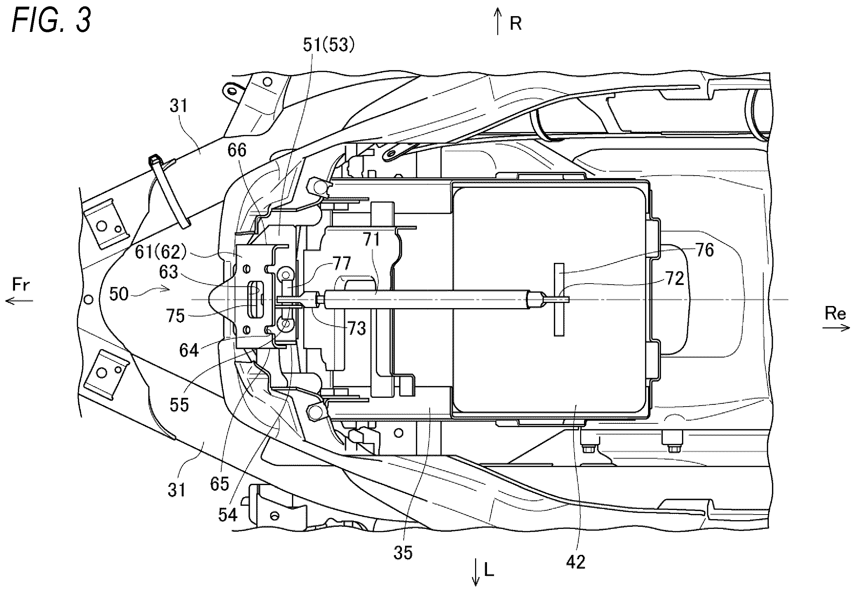

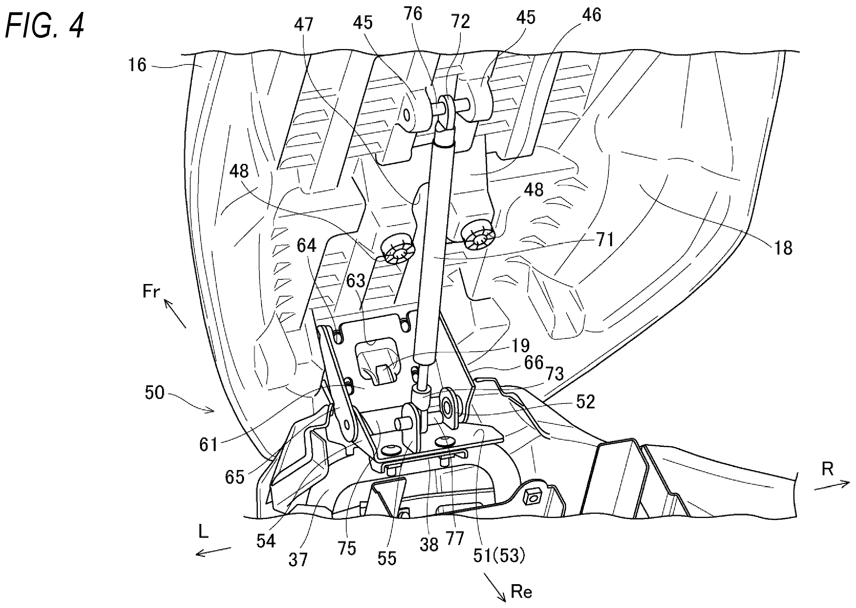

Hereinafter, the opening and closing mechanism for a seat of the straddle-type vehicle will be described with reference to Figs. 2 to 4. Fig. 2 is a left side view of a rear portion of a vehicle body of the present embodiment. Fig. 3 is a top view of the opening and closing mechanism for a seat of the present embodiment. Fig. 4 is a perspective view of the opening and closing mechanism for a seat according to the present embodiment. In Figs. 2 to 4, some members are indicated by two-dot chain lines or omitted.

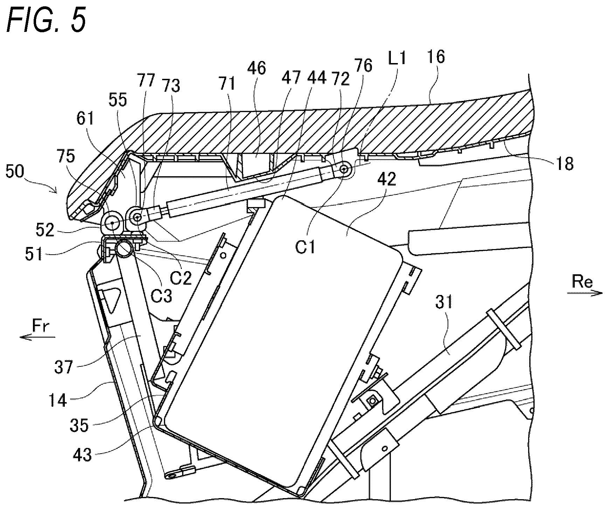

As shown in Figs. 2 and 3, a pair of side frames 31 extend obliquely upward from the front to the rear at the rear portion of the vehicle body of the straddle-type vehicle 1. A battery support frame 35 is fixed to inner sides of the pair of side frames 31. The battery support frame 35 is formed in a rectangular parallelepiped cage shape by combining vertical frames and horizontal frames. A rectangular parallelepiped battery 42 is accommodated inside the battery support frame 35. In a side view, the battery support frame 35 and the battery 42 are inclined such that a front upper end 44 of the battery 42 is behind a front lower end 43 (see Fig. 5) of the battery 42.

A seat support frame 37 is fixed to a lower front side of the battery support frame 35, and the seat support frame 37 extends upward from a lower portion of the battery support frame 35 along the body cover 14. A front end portion of the seat 16 is coupled to an upper portion of the seat support frame 37 via an opening and closing mechanism 50 with a damper 71. The pair of side frames 31 are connected to each other via a bridge bracket 32 behind the battery support frame 35. A seat lock 33 is provided on the bridge bracket 32, and a seat striker 17 is provided at a rear end portion of the seat 16. When the seat 16 is closed, the seat striker 17 is locked to the seat lock 33.

A fixed bracket 34 protrudes downward from near rising portions on a front side of the pair of side frames 31, and the swing arm 24 is swingably supported by the fixed bracket 34 via a pivot 27. A base end portion of the swing arm 24 forms a motor case 28, and a motor (not shown) is installed inside the motor case 28. The rear wheel 25 is supported by a rear end of the swing arm 24, and a rear suspension (not shown) is connected to the rear end of the swing arm 24. Since the motor is located closer to the pivot 27 of the swing arm 24, vibration transmitted to the motor when the swing arm 24 swings is reduced.

As shown in Figs. 3 and 4, the opening and closing mechanism 50 of the seat 16 includes first to third base brackets 51, 52, and 55, a seat bracket 61, and the damper (repulsion member) 71. The seat bracket 61 is coupled to the first and second base brackets 51 and 52 via a seat rotation shaft 75, and a seat plate 18 is coupled to the third base bracket 55 via the damper 71. As the seat 16 is opened or closed, the seat bracket 61 swings relative to the first and second base brackets 51 and 52, and as the seat 16 is opened or closed, the damper 71 expands and contracts, thereby applying a repulsion force to the seat 16 in an opening direction.

A flat support plate 38 is provided at an upper end of the seat support frame (vehicle body) 37, and the first base bracket 51 is fixed to an upper surface of the support plate 38 by screws. A lower plate 53 of the first base bracket 51 extends in a vehicle width direction, and a side plate 54 rises from one side edge (left side edge) of the lower plate 53 of the first base bracket 51. The second base bracket 52 is attached to the other side edge (right side edge) of the lower plate 53 of the first base bracket 51. The second base bracket 52 stands up from the lower plate 53 of the first base bracket 51, and the second base bracket 52 faces the side plate 54 of the first base bracket 51 with a space therebetween.

The seat bracket 61 is attached to the seat plate 18 on a lower surface of the seat 16. A hook 19 protrudes downward from a front side of a lower surface of the seat plate 18, and an opening 63 at a center of an upper plate 62 of the seat bracket 61 is hooked on the hook 19. Four elongated holes 64 are formed around the opening 63 of the upper plate 62, and the seat bracket 61 is fixed to the seat plate 18 by screws through the elongated holes 64. A pair of side plates 65 and 66 are connected to both side edges of the upper plate 62 of the seat bracket 61, respectively, and the pair of side plates 65 and 66 overlap the side plate 54 of the first base bracket 51 and the second base bracket 52, respectively, from an outer side in the vehicle width direction.

An overlapping portion between the side plate 54 of the first base bracket 51 and the side plate 65 of the seat bracket 61 and an overlapping portion between the second base bracket 52 and the side plate 66 of the seat bracket 61 are coupled via the seat rotation shaft 75. The third base bracket (vehicle body) 55 is attached to the lower plate 53 of the first base bracket 51 at a middle position in the vehicle width direction. The third base bracket 55 stands up from the lower plate 53 of the first base bracket 51, and the third base bracket 55 is located behind the second base bracket 52. A base end portion 73 of the damper 71 is swingably coupled to the third base bracket 55 via a coupling pin 77.

A distal end portion 72 of the damper 71 is coupled to the seat 16. More specifically, the seat plate 18 on the lower surface of the seat 16 is recessed in a dome shape, and a pair of left and right coupling portions 45 protrude from a middle position of the seat plate 18 in a front-rear direction. The distal end portion 72 of the damper 71 is swingably coupled to the pair of coupling portions 45 of the seat plate 18 via a coupling pin 76. The seat 16 is coupled to the third base bracket 55 via the damper 71, and as the seat 16 swings, the damper 71 expands and contracts while swinging with the base end portion 73 as a fulcrum. In this way, the damper 71 is installed using the dome-shaped space inside the seat plate 18.

A support portion 46 protrudes downward from the seat plate 18 between the seat bracket 61 and the pair of coupling portions 45. A center of the support portion 46 in the vehicle width direction is recessed to form a recess 47, and the damper 71 is fitted inside the recess 47. A pair of rubber bushes 48 are provided on a bifurcated lower end surface of the support portion 46. When the seat 16 is closed, the pair of rubber bushes 48 abut against the battery support frame 35, and the seat 16 is supported from below by the battery support frame 35. The pair of rubber bushes 48 reduces the transmission of vibration from the vehicle body to the seat 16 and also reduces the displacement of the seat 16 relative to the vehicle body.

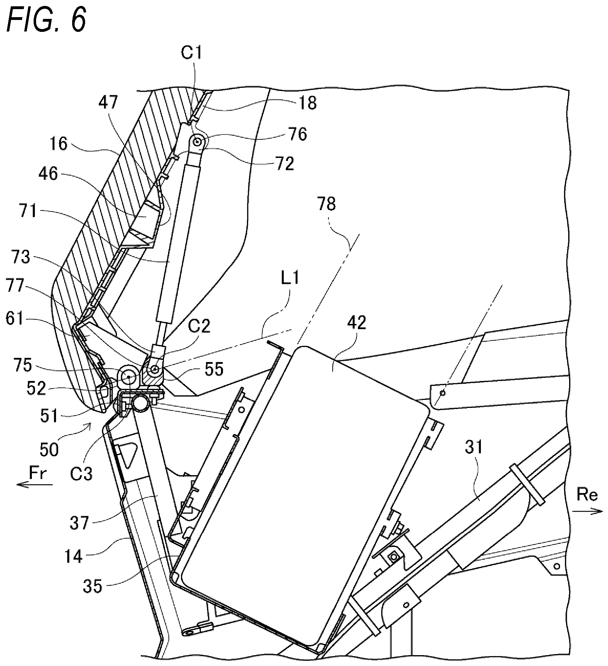

Hereinafter, an opening and closing operation of the seat will be described with reference to Figs. 5 and 6. Fig. 5 is a cross-sectional view showing the opening and closing mechanism of the present embodiment when the seat is closed. Fig. 6 is a cross-sectional view showing the opening and closing mechanism of the present embodiment when the seat is open.

As shown in Fig. 5, the battery support frame 35 is installed in a state of being inclined rearward below the seat 16, and the battery 42 inside the battery support frame 35 is also inclined rearward. The seat support frame 37 extends along the body cover 14 from the lower portion of the battery support frame 35, and the first and second base brackets 51 and 52 and the seat bracket 61 are coupled via the seat rotation shaft 75 at the upper portion of the seat support frame 37. The base end portion 73 of the damper 71 is coupled to the coupling pin 77 of the third base bracket 55 on the seat support frame 37, and the distal end portion 72 of the damper 71 is coupled to the coupling pin 76 of the seat plate 18.

At this time, the damper 71 is located inside both ends of the battery 42 in the vehicle width direction (see Fig. 3). The base end portion 73 of the damper 71 is located in front of the battery 42, and the distal end portion 72 of the damper 71 is located above the battery 42. The damper 71 is installed using a space generated by tilting the battery 42. The distal end portion 72 of the damper 71 is located rearward than the base end portion 73 of the damper 71, and the distal end portion 72 is located upward than the base end portion 73. Since the damper 71 extends upward toward the rear and is brought closer to the seat plate 18, a large storage space can be secured below the seat 16.

As described above, the support portion 46 protrudes downward from the seat plate 18, but since the damper 71 fits into the recess 47 of the support portion 46, the damper 71 does not interfere with the support portion 46 even when the damper 71 is brought closer to the seat plate 18. At this time, the recess 47 of the seat plate 18 is located at the center in the vehicle width direction. The driver places left and right buttocks on the seat 16, but the buttocks (sit bones) of the driver are not positioned directly above the damper 71 (recess 47). Therefore, a thickness of the seat 16 is sufficiently secured directly below the left and right buttocks. Therefore, the damper 71 can be brought closer to the lower surface of the seat 16 without reducing the thickness of the seat 16 below the left and right buttocks.

When the seat 16 is closed, a swing center C1 (a center of the coupling pin 76) of the distal end portion 72 of the damper 71 is located on a straight line L1 connecting a swing center C3 (a center of the seat rotation shaft 75) of the seat bracket 61 and a swing center C2 (a center of the coupling pin 77) of the base end portion 73 of the damper 71. When the seat 16 and the damper 71 are stopped at a dead point where the swing centers C1 to C3 are aligned, the repulsion force of the damper 71 does not act on the seat 16. Therefore, the repulsion force of the damper 71 does not make unlocking of the seat lock 33 difficult. In addition, a gap is less likely to form at a joint portion between the seat 16 and a cover or the like, and waterproofing properties are not deteriorated.

As shown in Fig. 6, when the seat 16 is opened from the closed state, the seat bracket 61 starts to swing in the opening direction with the seat rotation shaft 75 as a fulcrum relative to the first and second base brackets 51 and 52. As the seat bracket 61 swings, the damper 71 swings obliquely upward with the coupling pin 77 as a fulcrum. At this time, the damper 71 swings such that the swing center C1, which is the point of action of the damper 71, is above the straight line L1, and thus the repulsion force of the damper 71 begins to act on the seat 16. The seat 16 is pushed up in the opening direction by the repulsion force of the damper 71 to assist a lifting operation of the seat 16.

In this case, the seat bracket 61 is disposed at a middle position of the seat 16 in the vehicle width direction, and the damper 71 is located at a middle position in the vehicle width direction inside both ends of the seat bracket 61 in the vehicle width direction (see Fig. 3). Therefore, when the seat 16 is opened, the repulsion force of the damper 71 is equally applied to left and right sides of the seat 16, and left and right inclination of the seat 16 is reduced. In addition, the damper 71 pushes up the seat 16 without twisting the seat bracket 61. As described above, since the damper 71 is not installed offset in the vehicle width direction, the repulsion force of the damper 71 is smoothly transmitted to the seat 16.

When the seat 16 is further opened, the seat 16 approaches a standing posture. As the seat 16 is opened, the moment at which the seat 16 falls under its own weight decreases. The moment due to the repulsion force of the damper 71 becomes larger than the moment at which the seat 16 falls under its own weight, and the seat 16 is held in an open state by the repulsion force of the damper 71. When the seat 16 is opened, the battery 42 is attachable to and detachable from the battery support frame 35 from above, and the damper 71 is located frontward than an attachment and detachment trajectory 78 of the battery 42. Therefore, the damper 71 does not hinder the attachment and detachment of the battery 42, improving the ease of attachment and detachment of the battery 42.

As described above, according to the opening and closing mechanism 50 of the present embodiment, when the seat 16 is lifted and the seat bracket 61 swings relative to the first and second base brackets 51 and 52, the seat 16 is pushed up in the opening direction by the damper 71, and the lifting operation of the seat 16 is assisted. When the seat 16 is closed, the repulsion force of the damper 71 does not act in the opening direction of the seat 16. Therefore, the repulsion force of the damper 71 does not make an unlocking operation of the seat lock 33 difficult. In addition, a gap is less likely to form at a joint portion between the seat 16 and a cover or the like, and waterproofing properties are not deteriorated.

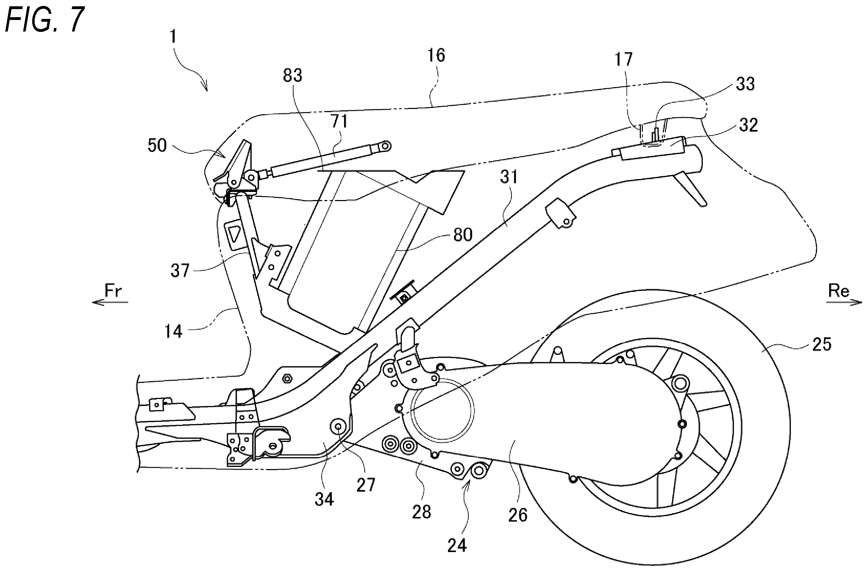

In the present embodiment, although a battery is installed below the seat, a storage box may be installed below the seat. Here, an opening and closing mechanism for a seat according to a modification will be described with reference to Fig. 7. Regarding the opening and closing mechanism for a seat of the modification, description of the same configuration as the opening and closing mechanism for a seat of the present embodiment will be omitted.

As shown in Fig. 7, a storage box 80 having an opening in an upper surface thereof is installed below the seat 16. In a side view, the storage box 80 is inclined such that a front upper end of the storage box 80 is located rearward than a front lower end of the storage box 80. A flange 83 is formed on a front edge of the opening of the storage box 80, and the seat 16 is supported from below by the flange 83 of the storage box 80. In the modification, as in the present embodiment, the seat bracket 61 is coupled to the first and second base brackets 51 and 52 (see Fig. 5), and the seat 16 (seat plate 18) is coupled to the third base bracket 55 via the damper 71.

The damper 71 is located inside both ends of the storage box 80 in a vehicle width direction. More specifically, the damper 71 is located at a middle position in the vehicle width direction inside both ends of the seat bracket 61 in the vehicle width direction. Therefore, a repulsion force of the damper 71 is equally applied to left and right sides the seat 16, and the seat 16 is smoothly opened and closed. The base end portion 73 (see Fig. 5) of the damper 71 is located in front of the storage box 80, the distal end portion 72 (see Fig. 5) of the damper 71 is located above the storage box, and the damper 71 is installed using a dead space in front of the storage box 80. Since the base end portion 73 of the damper 71 is located frontward than the opening of the storage box 80, the damper 71 does not hinder the storage of items, improving the convenience of the storage box 80.

In the present embodiment and the modification, although a base end portion of a damper is coupled to a third base bracket, the base end portion of the damper may be swingably coupled to a vehicle body. For example, the base end portion of the damper may be coupled to a seat support frame, or may be coupled to a vehicle body cover such as a side cover or a vehicle body frame.

In the present embodiment and the modification, although first to third base brackets are separately formed, the first to third base brackets may be integrally formed.

In the present embodiment and the modification, although a battery is inclined, the battery may not be inclined.

In the present embodiment and the modification, although the damper has been described as an example of a repulsion member, the repulsion member may be any member capable of applying a repulsion force to a seat in an opening direction, and for example, the repulsion member may be a spring.

In the present embodiment and the modification, although the seat is not opened until the seat is in an upright position, but the seat may be opened to a position greater than the upright position. When the seat is opened to a position greater than the upright position, the seat cannot be closed under its own weight, but this prevents the seat from closing unexpectedly due to wind pressure or external forces.

In the present embodiment and the modification, although a configuration has been described in which a swing center of a distal end portion of the damper is located on a straight line connecting a swing center of a seat bracket and a swing center of the base end portion of the damper when the seat is closed, the present invention is not limited to this configuration. The swing center of the distal end portion of the damper may be located below the straight line connecting the swing center of the seat bracket and the swing center of the base end portion of the damper when the seat is closed. In such a configuration, when the seat is closed, the repulsion force of the damper is also prevented from being applied to the seat in the opening direction. In addition, by being attracted to the seat and a cover or the like, a gap is less likely to form, and waterproofing properties are improved.

Although the present embodiment describes an opening and closing mechanism for a seat that is coupled to a vehicle body of a straddle-type vehicle in an openable and closable manner, the opening and closing mechanism of the present embodiment can also be used as an opening and closing mechanism for first and second members other than the seat. For example, an opening and closing mechanism that couples a first member and a second member in an openable and closable manner includes a fixed bracket attached to the first member, a movable bracket attached to the second member, and a repulsion member configured to apply a repulsion force to the second member in an opening direction, in which the movable bracket is swingably coupled to the fixed bracket, a base end portion of the repulsion member is swingably coupled to the first member, a distal end portion of the repulsion member is swingably coupled to the second member, and when the second member is closed, a swing center of the distal end portion of the repulsion member is located on or below a straight line connecting a swing center of the movable bracket and a swing center of the base end portion of the repulsion member. Accordingly, when the second member is lifted and the movable bracket swings relative to the fixed bracket, the second member is pushed up in the opening direction by the repulsion member, and the lifting operation of the second member is assisted. When the second member is closed, the repulsion force of the repulsion member does not act in the opening direction of the second member. Therefore, the repulsion force of the repulsion member does not make an unlocking operation of a lock difficult. In addition, a gap is less likely to form at a joint portion between the first and second members, and waterproofing properties are not deteriorated. In this case, the first member may be a top case for storing items, and the second member may be a lid coupled to the top case in an openable and closable manner. Further, the first member may be a tank for storing a liquid or the like, and the second member may be a tank cover coupled to the tank in an openable and closable manner.

The opening and closing mechanism of the present embodiment is not limited to being applicable to the above straddle-type vehicle, but can also be applied to other vehicles such as ATVs (All Terrain Vehicles) and jet skis. The straddle-type vehicle is not limited to a general vehicle in which a driver rides on a seat in a posture straddling the seat, and includes a scooter-type vehicle in which the driver rides on the seat without straddling the seat.

As described above, a first aspect is an opening and closing mechanism (50) for a seat (16) that is coupled to a vehicle body of a straddle-type vehicle (1) in an openable and closable manner, the opening and closing mechanism including: a base bracket (first and second base brackets 51 and 52) attached to the vehicle body; a seat bracket (61) attached to the seat; and a repulsion member (damper 71) configured to apply a repulsion force to the seat in an opening direction, in which the seat bracket is swingably coupled to the base bracket, a base end portion (73) of the repulsion member is swingably coupled to the vehicle body (third base bracket 55), a distal end portion (72) of the repulsion member is swingably coupled to the seat, and when the seat is closed, a swing center (C1) of the distal end portion of the repulsion member is located on or below a straight line (L1) connecting a swing center (C3) of the seat bracket and a swing center (C2) of the base end portion of the repulsion member. According to this configuration, when the seat is lifted and the seat bracket swings relative to the base bracket, the seat is pushed up in the opening direction by the repulsion member, and the lifting operation of the seat is assisted. When the seat is closed, the repulsion force of the repulsion member does not act in the opening direction of the seat. Therefore, the repulsion force of the repulsion member does not make an unlocking operation of a seat lock difficult. In addition, a gap is less likely to form at a joint portion between the seat and a cover or the like, and waterproofing properties are not deteriorated.

In a second aspect according to the first aspect, the repulsion member is located inside both ends of the seat bracket in a vehicle width direction. According to this configuration, the repulsion member pushes up the seat without twisting the seat bracket.

In a third aspect according to the second aspect, the repulsion member is located at a middle position in the vehicle width direction when viewed from above. According to this configuration, when the seat is opened, the repulsion force of the repulsion member is equally applied to left and right sides of the seat via the seat bracket, and left and right inclination of the seat are reduced.

In a fourth aspect according to any one of the first to third aspects, the distal end portion of the repulsion member is located rearward than the base end portion of the repulsion member, and the distal end portion is located upward than the base end portion. According to this configuration, the repulsion member extends upward toward the rear and is brought closer to a lower surface of the seat, and thus a large storage space can be secured below the seat.

In a fifth aspect according to the fourth aspect, a seat plate (18) is provided on a lower surface of the seat, and the repulsion member fits into a recess (47) recessed upward in the seat plate. According to this configuration, the repulsion member is brought closer to the lower surface of the seat, and a large storage space can be secured below the seat.

In a sixth aspect according to the fifth aspect, the recess of the seat plate is located on a center line in the vehicle width direction. According to this configuration, the repulsion member can be brought closer to the lower surface of the seat without reducing a thickness of the seat below left and right buttocks (sit bones).

In a seventh aspect according to any one of the first to sixth aspects, a battery (42) is stored below the seat, the repulsion member is located inside both ends of the battery in the vehicle width direction, the base end portion of the repulsion member is located in front of the battery, and the distal end portion of the repulsion member is located above the battery. According to this configuration, the repulsion member can be installed using a dead space in front of the battery.

In an eighth aspect according to the seventh aspect, the battery is attachable to and detachable from the vehicle body from above, and the base end portion of the repulsion member is located frontward than an attachment and detachment trajectory (78) of the battery. According to this configuration, the repulsion member does not hinder the attachment and detachment of the battery, improving the ease of attachment and detachment of the battery.

In a ninth aspect according to any one of the first to sixth aspects, a storage box (80) having an opening in an upper surface thereof is installed below the seat, the repulsion member is located inside both ends of the storage box in the vehicle width direction, the base end portion of the repulsion member is located in front of the storage box, the distal end portion of the repulsion member is located above the storage box, and the base end portion of the repulsion member is located frontward than the opening of the storage box. According to this configuration, the repulsion member can be installed using a dead space in front of the storage box. Further, the repulsion member does not hinder the storage of items, improving the convenience of the storage box.

In a tenth aspect, an opening and closing mechanism that couples a first member and a second member in an openable and closable manner includes a fixed bracket attached to the first member, a movable bracket attached to the second member, and a repulsion member configured to apply a repulsion force to the second member in an opening direction, in which the movable bracket is swingably coupled to the fixed bracket, a base end portion of the repulsion member is swingably coupled to the first member, a distal end portion of the repulsion member is swingably coupled to the second member, and when the second member is closed, a swing center of the distal end portion of the repulsion member is located on or below a straight line connecting a swing center of the movable bracket and a swing center of the base end portion of the repulsion member. According to this configuration, when the second member is lifted and the movable bracket swings relative to the fixed bracket, the second member is pushed up in the opening direction by the repulsion member, and the lifting operation of the second member is assisted. When the second member is closed, the repulsion force of the repulsion member does not act in the opening direction of the second member. Therefore, the repulsion force of the repulsion member does not make an unlocking operation of a lock difficult. In addition, a gap is less likely to form at a joint portion between the first and second members, and waterproofing properties are not deteriorated.

Although the present embodiment has been described, a part or all of the embodiment and modification described above may be combined as another embodiment.

The technology of the present invention is not limited to the above embodiment and various changes, substitutions, and modifications may be made without departing from the gist of the technical concept. Further, the present invention may be implemented by other methods as long as the technical concept can be implemented by the methods through advance of the technique or other derivative techniques. Therefore, the claims cover all embodiments that may fall within the scope of the technical concept.

### REFERENCE SIGNS LIST

1: straddle-type vehicle
16: seat
18: seat plate
42: battery
47: recess of seat plate
50: opening and closing mechanism
51: first base bracket (base bracket)
52: second base bracket (base bracket)
55: third base bracket (vehicle body)
61: seat bracket
71: damper (repulsion member)
72: distal end portion of damper
73: base end portion of damper
78: attachment and detachment trajectory of battery
80: storage box

## Claims

1. An opening and closing mechanism (50) for a seat (16) that is coupled to a vehicle body (55) of a straddle-type vehicle (1) and configured to be openable and closable, the opening and closing mechanism (50) comprising:
a base bracket (51, 52) attached to the vehicle body (55);
a seat bracket (61) attached to the seat (16); and
a repulsion member (71) configured to apply a repulsion force to the seat (16) in an opening direction, wherein
the seat bracket (61) is swingably coupled to the base bracket (51, 52),
a base end portion (73) of the repulsion member (71) is swingably coupled to the vehicle body (55),
a distal end portion (72) of the repulsion member (71) is swingably coupled to the seat (16), and
when the seat (16) is closed, a swing center (C1) of the distal end portion (72) of the repulsion member (71) is located on a straight line (L1) connecting a swing center (C3) of the seat bracket (61) and a swing center (C2) of the base end portion (73) of the repulsion member (71) or below the straight line.

2. The opening and closing mechanism (50) according to claim 1, wherein
the repulsion member (71) is located inside both ends of the seat bracket (61) in a vehicle width direction.

3. The opening and closing mechanism (50) according to claim 2, wherein
the repulsion member (71) is located at a middle position in the vehicle width direction when viewed from above.

4. The opening and closing mechanism (50) according to claim 1 or 2, wherein
the distal end portion (72) of the repulsion member (71) is located rearward than the base end portion (73) of the repulsion member (71), and the distal end portion (72) is located upward than the base end portion (73).

5. The opening and closing mechanism (50) according to claim 4, wherein
a seat plate (18) is provided on a lower surface of the seat (16), and
the repulsion member (71) fits into a recess (47) which is recessed upward in the seat plate (18).

6. The opening and closing mechanism (50) according to claim 5, wherein
the recess (47) of the seat plate (18) is located on a center line in the vehicle width direction.

7. The opening and closing mechanism (50) according to claim 1 or 2, wherein
a battery (42) is stored below the seat (16),
the repulsion member (71) is located inside both ends of the battery (42) in the vehicle width direction,
the base end portion (73) of the repulsion member (71) is located in front of the battery (42), and
the distal end portion (72) of the repulsion member (71) is located above the battery (42).

8. The opening and closing mechanism (50) according to claim 7, wherein
the battery (42) is attachable to and detachable from the vehicle body (55) from above, and
the base end portion (73) of the repulsion member (71) is located frontward than an attachment and detachment trajectory (78) of the battery (42).

9. The opening and closing mechanism (50) according to claim 1 or 2, wherein
a storage box (80) having an opening in an upper surface thereof is installed below the seat (16),
the repulsion member (71) is located inside both ends of the storage box (80) in the vehicle width direction,
the base end portion (73) of the repulsion member (71) is located in front of the storage box (80),
the distal end portion (72) of the repulsion member (71) is located above the storage box (80), and
the base end portion (73) of the repulsion member (71) is located frontward than the opening of the storage box (80).

10. An opening and closing mechanism (50) that couples a first member and a second member in an openable and closable manner, the opening and closing mechanism comprising:
a fixed bracket attached to the first member;
a movable bracket attached to the second member; and
a repulsion member configured to apply a repulsion force to the second member in an opening direction, wherein
the movable bracket is swingably coupled to the fixed bracket,
a base end portion of the repulsion member is swingably coupled to the first member,
a distal end portion of the repulsion member is swingably coupled to the second member, and
when the second member is closed, a swing center of the distal end portion of the repulsion member is located on a straight line connecting a swing center of the movable bracket and a swing center of the base end portion of the repulsion member or below the straight line.
